# EUROPÄISCHE PATENTSCHRIFT

(11) **EP 1 303 188 B1**
(45) Veröffentlichungstag und Bekanntmachung des Hinweises auf die Patenterteilung: **25.01.2006**
(21) Anmeldenummer: 01936436.3
(22) Anmeldetag: 06.06.2001
(51) Int. Cl.: A01N 47/36, A01N 25/30

(54) **HERBIZIDE MITTEL**
HERBICIDAL AGENT
AGENTS HERBICIDES

(30) Priorität: 19.06.2000 DE 10029169
(43) Veröffentlichungstag der Anmeldung: 23.04.2003
(73) Patentinhaber: Aventis CropScience GmbH, 65929 Frankfurt am Main (DE)
(72) Erfinder: WÜRTZ, Jochen, 55543 Bad Kreuznach (DE); KOCUR, Jean, 65719 Hofheim (DE); KRAUSE, Hans-Peter, 65719 Hofheim (DE); MARTINEZ DE UNA, Julio, 65835 Liederbach (DE); HAASE, Detlev, 65929 Frankfurt (DE); BICKERS, Udo, 49835 Wietmarschen (DE); SCHNABEL, Gerhard, 63820 Elsenfeld (DE)
(86) Internationale Anmeldenummer: PCT/EP2001/006417
(87) Internationale Veröffentlichungsnummer: WO 2001/097615

(56) Entgegenhaltungen:
- EP-A- 0 968 649
- WO-A-98/42192
- CA-A- 2 093 377
- DE-A- 4 440 354
- US-A- 5 731 264
- GREEN J M ET AL: "SURFACTANT STRUCTURE AND CONCENTRATION STRONGLY AFFECT RIMSULFURON ACTIVITY" WEED TECHNOLOGY, CHAMPAIGN, IL, US, Bd. 7, Nr. 7, 1993, Seiten 633-640, XP000882663 ISSN: 0890-037X

## Beschreibung

Die Erfindung bezieht sich auf das technische Gebiet der Pflanzenschutzmittel, insbesondere betrifft die Erfindung herbizide Mittel mit einem Gehalt an bestimmten Sulfonylharnstoffen und/oder ihren Salzen und speziellen Tensiden, die sich hervorragend zur Bekämpfung von Schadpflanzen in Pflanzenkulturen eignen.

Die Verwendung von Sulfonylharnstoffen als aktive Komponente von Pflanzenschutzmitteln ist bekannt (z.B. EP-A-007 687, EP-A-030 138). Ebenso ist bekannt, Sulfonylharnstoffe wie Nicosulfuron (Accent®) mit Tensiden zu kombinieren (z.B. Weed Technology 1999, Vol. 13, Seite 737-740).

Aufgabe der vorliegenden Erfindung bestand darin, herbizide Mittel bereitzustellen, welche eine besonders hohe herbizide Wirkung aufweisen.

Es wurde nun überraschend gefunden, daß herbizide Mittel, die bestimmte Sulfonylharnstoffe in Kombination mit speziellen Tensiden enthalten, diese Aufgabe erfüllen.

Die vorliegende Erfindung betrifft somit herbizide Mittel, enthaltend
A) einen oder mehrere Sulfonylharnstoffe der allgemeinen Formel (I) und/oder deren Salze 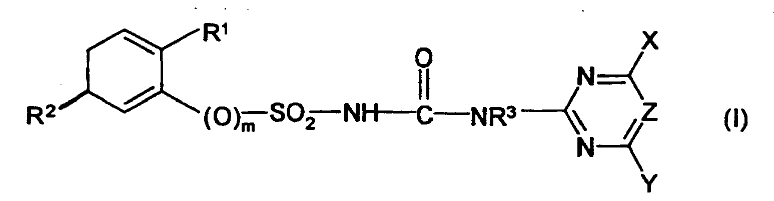
   worin
   - R¹: C₂-C₄-Alkoxy oder CO-R^{a} ist, worin R^{a} gleich OH, C₁-C₆-Alkoxy oder NR^{b}R^{c} ist, worin R^{b} und R^{c} unabhängig voneinander gleich oder verschieden H oder C₁-C₆-Alkyl sind,
   - R²: Halogen oder (A)ₙ-NR^{d}R^{e} ist, worin n gleich Null oder 1 ist, A eine Gruppe CR^{f}R^{g} ist, worin R^{f} und R^{g} unabhängig voneinander gleich oder verschieden H oder C₁-C₆-Alkyl sind, R^{d} gleich H oder C₁-C₆-Alkyl ist und R^{e} H, C₁-C₆-Alkyl oder ein Acyl-Rest ist, wobei R^{d} und R^{e} auch einen heterocyclischen Ring bilden können,
   - R³: H oder C₁-C₆-Alkyl ist,
   - m: gleich Null oder 1 ist,
   - X und Y: unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy,
   - Z: gleich CH oder N ist, und
B) eines oder mehrere Tenside, enthaltend als Strukturelement mindestens 10, vorzugsweise 10-200 Alkylenoxideinheiten.

Das Tensid B) enthält bevorzugt 10-150 Alkylenoxideinheiten, einen oder mehrere C₁ - C₄₀ - kohlenstoffhaltige Reste und gegebenenfalls eine oder mehrere polare funktionelle Gruppen.

Unter dem Begriff Alkylenoxideinheiten werden vorzugsweise Einheiten von C₂-C₁₀₋Alkylenoxiden, wie Ethylenoxid, Propylenoxid, Butylenoxid oder Hexylenoxid verstanden, wobei die Einheiten innerhalb des Tensids gleich oder voneinander verschieden sein können.

Als polare funktionelle Gruppen kommen z.B. in Frage anionische Gruppen wie Carboxylat, Carbonat, Sulfat, Sulfonat, Phosphat oder Phosphonat, kationische Gruppen wie Gruppen mit einem kationischen Stickstoffatom, z.B. eine Pyridinium-Gruppe oder eine -NR^{Y}₃-Gruppe, worin R^{y} gleich oder verschieden H oder ein unsubstituierter oder substituierter C₁-C₁₀- Kohlenwasserstoffrest wie C₁-C₁₀-Alkyl ist, elektrisch neutrale, polare Gruppen wie Carbonyl, lmin, Cyano oder Sulfonyl, oder betainische Gruppen wie 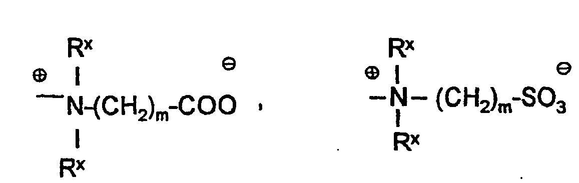 oder 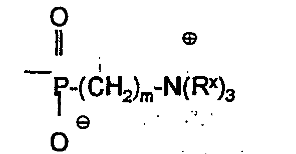 worin m = 1,2,3,4 oder 5 ist und R^{x} gleich oder verschieden unsubstituierte oder substituierte C₁ - C₁₀ - Kohlenwasserstoffreste wie C₁ - C₁₀ - Alkyl sind.
Vorzugsweise enthält das erfindungsgemäße Mittel als Komponente B) eines oder mehrere Tenside der allgemeinen Formel (II)

R⁴-(EO)ₓ (PO)_{y} (EO)_{z}-R⁵ (II)

worin
- EO: eine Ethylenoxideinheit bedeutet,
- PO: eine Propylenoxideinheit bedeutet,
- x: eine ganze Zahl von 1 bis 50 bedeutet,
- y: eine ganze Zahl von 0 bis 50 bedeutet,
- z: eine ganze Zahl von 0 bis 50 bedeutet,
wobei die Summe (x+y+z)≥ 10 und ≤ 150 ist, und
- R⁴: OH, einen unsubstituierten oder substituierten C₁-C₄₀₋Kohlenwasserstoffoxyrest, einen O-Acylrest wie O-COR', O-CO-OR', O-CO-NR^{I}R^{II}, O-P(O)(R^{I})[(EO)ᵤ(OR^{II})] oder O-P(O)[(EO) ᵤ(OR^{I})][(EO)ᵥ(OR^{II})] oder NR^{I}R^{II} oder [NR^{I}R^{II}R^{III}]^{⊕}X^{⊖} bedeuten, worin R^{I}, R^{II} und R^{III} gleich oder verschieden H oder einen unsubstituierten oder substituierten C₁-C₃₀₋Kohlenwasserstoffrest bedeuten, der optional über eine Gruppe (EO)_{w}, worin w eine ganze Zahl von 1 bis 50 ist, gebunden sein kann, X^{⊝} ein Anion ist (z.B. das Anion einer organischen Säure wie ein Carbonsäureanion z.B. Acetat oder Lactat, oder das Anion einer anorganischen Säure wie ½ Sulfat, [O-SO₃₋CH₃]^{⊝}, Sulfonat, 1/3 Phosphat, Phosphonat oder Halogenid wie Cl^{⊝} oder Br^{⊝}), und u, v unabhängig voneinander eine ganze Zahl von 0 bis 50 bedeuten, und
- R⁵: H, einen unsubstituierten oder substituierten C₁-C₄₀-Kohlenwasserstoffrest, einen Acylrest wie COR^{I}, CO-OR^{I}, CO-NR^{I}R^{II}, P(O)(R^{I})[(EO)ᵤ (OR^{II})] oder P(O)[(EO)ᵤ(OR^{I})][(EO)ᵥ(OR^{II})] oder NR^{I}R^{II} oder [NR^{I}R^{II}R^{III}]^{⊕}X^{⊖} bedeuten, worin R^{I}, R^{II} und R^{III} gleich oder verschieden H oder einen unsubstituierten oder substituierten C₁-C₃₀-Kohlenwasserstoffrest bedeuten, der optional über eine Gruppe (EO)_{w}, worin w eine ganze Zahl von 1 bis 50 ist, gebunden sein kann, X^{⊖} ein Anion ist (z.B. das Anion einer organischen Säure wie ein Carbonsäureanion z.B. Acetat oder Lactat, oder das Anion einer anorganischen Säure wie ½ Sulfat, [O-SO₃-CH₃]^{⊖}, Sulfonat, 1/3 Phosphat, Phosphonat oder Halogenid wie CI^{⊖} oder Br^{⊖}), und u, v unabhängig voneinander eine ganze Zahl von 0 bis 50 bedeuten.

Die Abkürzung EO in Formel (II) bedeutet eine Ethylenoxideinheit, auch soweit sie in der Definition von R⁴ und R⁵ verwendet wird.

Bevorzugt sind Tenside der Formel (II), worin die Summe (x+y+z)≥ 10 und ≤ 150, bevorzugt 11-100, besonders bevorzugt 12-80 ist, und
- R⁴: OH, einen unsubstituierten oder substituierten C₁-C₃₀-, vorzugsweise C₄₋C₂₀ - Kohlenwasserstoffoxyrest wie einen C₈-, C₁₀-, C₁₂-, C₁₃-(z.B. isotridecyl), C₁₄-, C₁₆-, C₁₈-, C₂₀- Alkoxyrest, -Alkenyloxyrest oder-Alkinyloxyrest, oder einen unsubstituierten oder substituierten, z.B. ein- oder mehrfach durch C₁ - C₂₀ - Alkyl substituierten C₆ - C₁₄ - Aryloxyrest wie p-Octylphenoxy, p-Nonylphenoxy, 2,4-Dibutylphenoxy, 2,4,6-Tri-isobutylphenoxy, 2,4,6-Tri-n-butylphenoxy oder 2,4,6-Tri-sec-butylphenoxy bedeutet, oder R⁴ O-CO-R^{I}, O-COOR^{I}, NR^{I} R^{II} oder [NR^{I} R^{II} R^{III}] ^{⊕} X ^{⊖} bedeutet,
worin R^{I}, R^{II} und R^{III} gleich oder verschieden H, einen unsubstituierten oder substituierten C₁-C₃₀-, vorzugsweise C₄ - C ₂₀ -Kohlenwasserstoffrest wie einen C₈-, C₁₀-, C₁₂-, C₁₃- (z.B. isotridecyl), C₁₄-, C₁₆-, C₁₈-, C₂₀- Alkylrest,
-Alkenylrest oder -Alkinylrest, oder einen unsubstituierten oder substituierten, z.B. ein -oder mehrfach durch C₁ -C₂₀- Alkyl substituierten C₆ - C₁₄ - Arylrest wie p-Octylphenyl, p-Nonylphenyl, 2,4-Dibutylphenyl, 2,4,6-tri-isobutylphenyl, 2,4,6-tri-n-butylphenyl oder 2,4,6-tri-sec-butylphenyl bedeuten, oder R^{I}, R^{II} und R^{III} gleich oder verschieden (EO)_{w}-R^{IV} sind, worin R^{IV} H oder ein unsubstituierter oder substituierter C₁-C₂₀-Kohlenwasserstoffrest ist wie ein C₈-, C₁₀-, C₁₂-, C₁₃- (z.B. isotridecyl), C₁₄-, C₁₆-, C₁₈-, C₂₀-Alkylrest,
-Alkenylrest oder -Alkinylrest, oder einen unsubstituierten oder substituierten, z.B. ein-oder mehrfach durch C₁-C₂₀-Alkyl substituierten C₆-C₁₄-Arylrest wie p-Octylphenyl, p-Nonylphenyl, 2,4-Dibutylphenyl, 2,4,6-tri-isobutylphenyl, 2,4,6-tri-n-b-utylphenyl oder 2,4,6-tri-sec-butylphenyl und w eine ganze Zahl von 1 bis 50 bedeutet, und X^{⊖} ein Anion ist, und
- R⁵: H, einen unsubstituierten oder substituierten C₁-C₃₀-, vorzugsweise C₁-C₂₀₋Kohlenwasserstoffrest wie einen C₁-, C₂-, C₃-, C₄-, C₅-, C₆-, C₈-, C₁₀-, C₁₂-, C₁₃-(z.B. isotridecyl), C₁₄-, C₁₆-, C₁₈-, C₂₀- Alkylrest, -Alkenylrest oder
-Alkinylrest, oder einen unsubstituierten oder substituierten, z.B. ein-oder mehrfach durch C₁-C₂₀-Alkyl substituierten C₆-C₁₄- Arylrest wie p-Octcylphenyl, p-Nonylphenyl, 2,4-Dibutylphenyl, 2,4,6-Tri-isobutylphenyl, 2,4,6-Tri-n-butylphenyl oder 2,4,6-Tri-sec-butylphenyl bedeutet, oder R⁵CO-R^{I} COOR^{I}, NR^{I} R^{II} oder [NR^{I} R^{II} R^{III}] ^{⊕} X ^{⊖} bedeutet, worin R^{I} , R^{II} und R^{III} gleich oder verschieden H, einen unsubstituierten oder substituierten C₁-C₃₀-, vorzugsweise C₁-C₂₀- Kohlenwasserstoffrest wie einen C₁-, C₂-, C₃-, C₄-, C₅-, C₆-, C₈-, C₁₀-, C₁₂-, C₁₃- (z.B. isotridecyl), C₁₄-, C₁₆-,
C₁₈-, C₂₀- Alkylrest, -Alkenylrest oder -Alkinylrest, oder einen unsubstituierten oder substituierten, z.B. ein-oder mehrfach durch C₁-C₂₀- Alkyl substituierten C₆-C₁₄- Arylrest wie p-Octylphenyl, p-Nonylphenyl, 2,4-Dibutylphenyl, 2,4,6-tri-isobutylphenyl, 2,4,6-tri-n-butylphenyl oder 2,4,6-tri-sec-butylphenyl bedeuten, oder R^{I}, R^{II} und R^{III} gleich oder verschieden (EO)_{w}-R^{IV} sind, worin R^{IV} H oder ein unsubstituierter oder substituierter C₁-C₃₀-, vorzugsweise C₁₋C₂₀-Kohlenwasserstoffrest ist wie ein C₁-, C₂-, C₃-, C₄-, C₅-, C₆-, C₈-, C₁₀-, C₁₂₋, C₁₃- (z.B. isotridecyl), C₁₄-, C₁₆-, C₁₈-, C₂₀- Alkylrest, -Alkenylrest oder-Alkinylrest, oder einen unsubstituierten oder substituierten, z.B. ein-oder mehrfach durch C₁-C₂₀- Alkyl substituierten C₆-C₁₄- Arylrest wie p-Octylphenyl, p-Nonylphenyl, 2,4-Dibutylphenyl, 2,4,6-tri-isobutylphenyl, 2,4,6-tri-n-butylphenyl oder 2,4,6-tri-sec-butylphenyl und w eine ganze Zahl von 1 bis 50 bedeutet, und X^{⊖} ein Anion ist.

Besonders bevorzugt sind Tenside der Formel (II), worin die Summe (x+y+z) gleich 11-80, bevorzugt 12-50 ist,
- R⁴: (C₈-C₁₈)-Alkoxy, (C₈-C₁₈)-Alkenyloxy oder (C₈-C₁₈) Alkinyloxy, (C₇-C₁₇)-Alkylcarbonyloxy, (C₇-C₁₇)-Alkenylcarbonyloxy, (C₇-C₁₇)-Alkinylcarbonyloxy, oder (C₁-C₁₀)-Alkylphenoxy wie Octylphehoxy, p-Nonylphenoxy, 2,4,6-Tri-n-butylphenoxy, 2,4,6-Tri-iso-Butylphenoxy oder 2,4,6-tri-sec-butylphenoxy ist, und
- R⁵: H, (C₁-C₁₈)-, bevorzugt (C₁-C₆)-Alkyl, (C₂-C₁₈)-, bevorzugt (C₂-C₆)-Alkenyl oder (C₂-C₁₈)-, bevorzugt (C₂-C₆)-Alkinyl, CO-H, CO-(C₁-C₁₇)-Alkyl, CO-(C₂₋C₁₇)-Alkenyl oder CO-(C₂-C₁₇)-Alkinyl ist.

Tenside B), z.B. der Formel (II) sind literaturbekannt, z.B. aus McCutcheon's Emulsifers&Detergents 1994, Vol. 1: North American Edition und Vol. 2, International Edition; McCutcheon Division, Glen Rock NJ, USA sowie aus "Surfactants in Consumer Products", J. Falbe, Springer-Verlag Berlin, 1987. Die hierin genannten Tenside B) sind durch Bezugnahme Bestandteil dieser Beschreibung. Außerdem sind Tenside B), z.B. der Formel (II) auch kommerziell erhältlich, z.B. unter den Markennamen Genapol® X oder O oder T-Reihe, Sapogenat® T-Reihe, Arkopal® N-Reihe, Afilan® PTU, Hordaphos® und Emulsogen®-Reihe von Clariant AG; Agrilan®-Typen von Akcros Organics; Alkamul® und Antarox®-Typen von Rhodia; Emulan®-Typen (NP, OC, OG, OK) von BASF AG; Dehydol®-Typen von Henkel; Agent W®-Typen von Stepan Company; Crodamel®-Typen von Croda GmbH. Die in den jeweiligen Produktbroschüren genannten Tenside B) sind durch Bezugnahme Bestandteil dieser Beschreibung.

### Beispiele für Tenside B), z.B. der Formel (II) sind in der nachfolgenden Tabelle 1 aufgeführt:

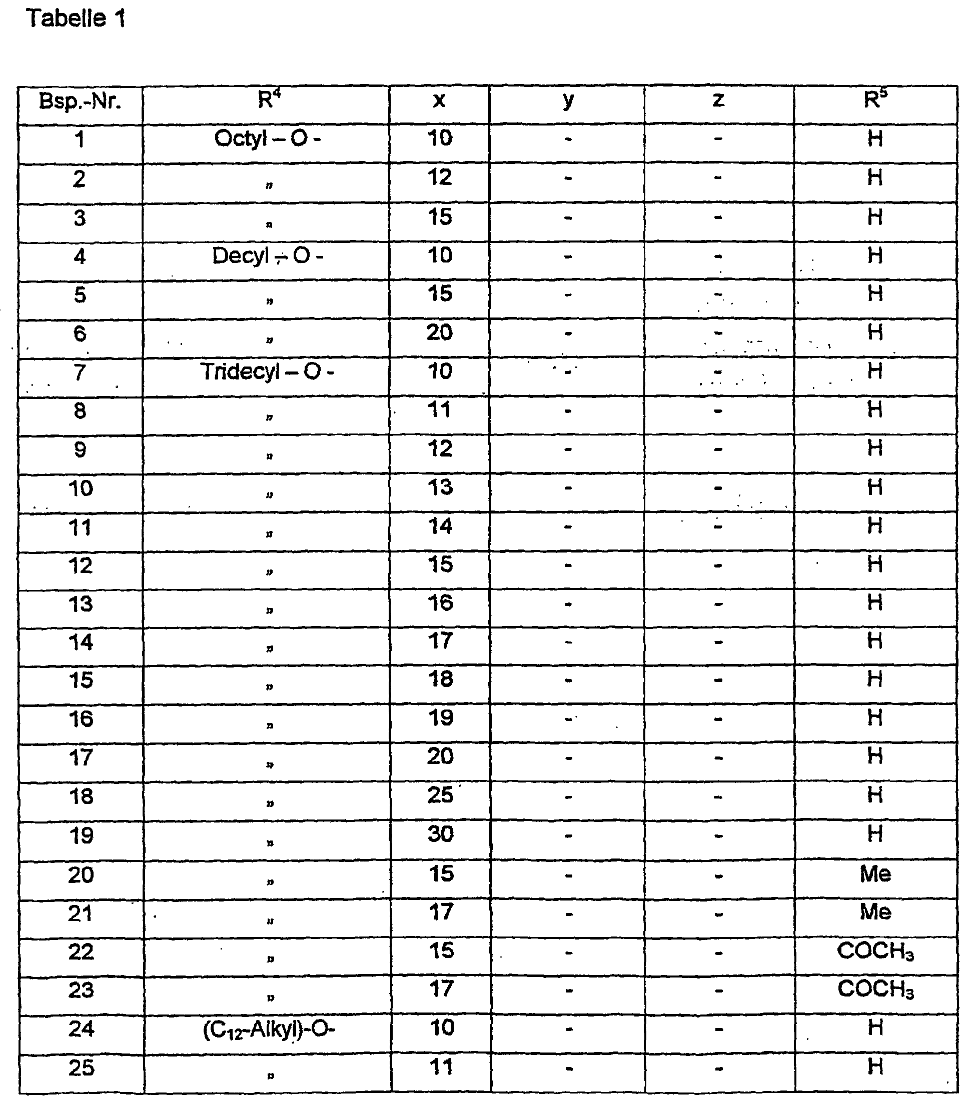

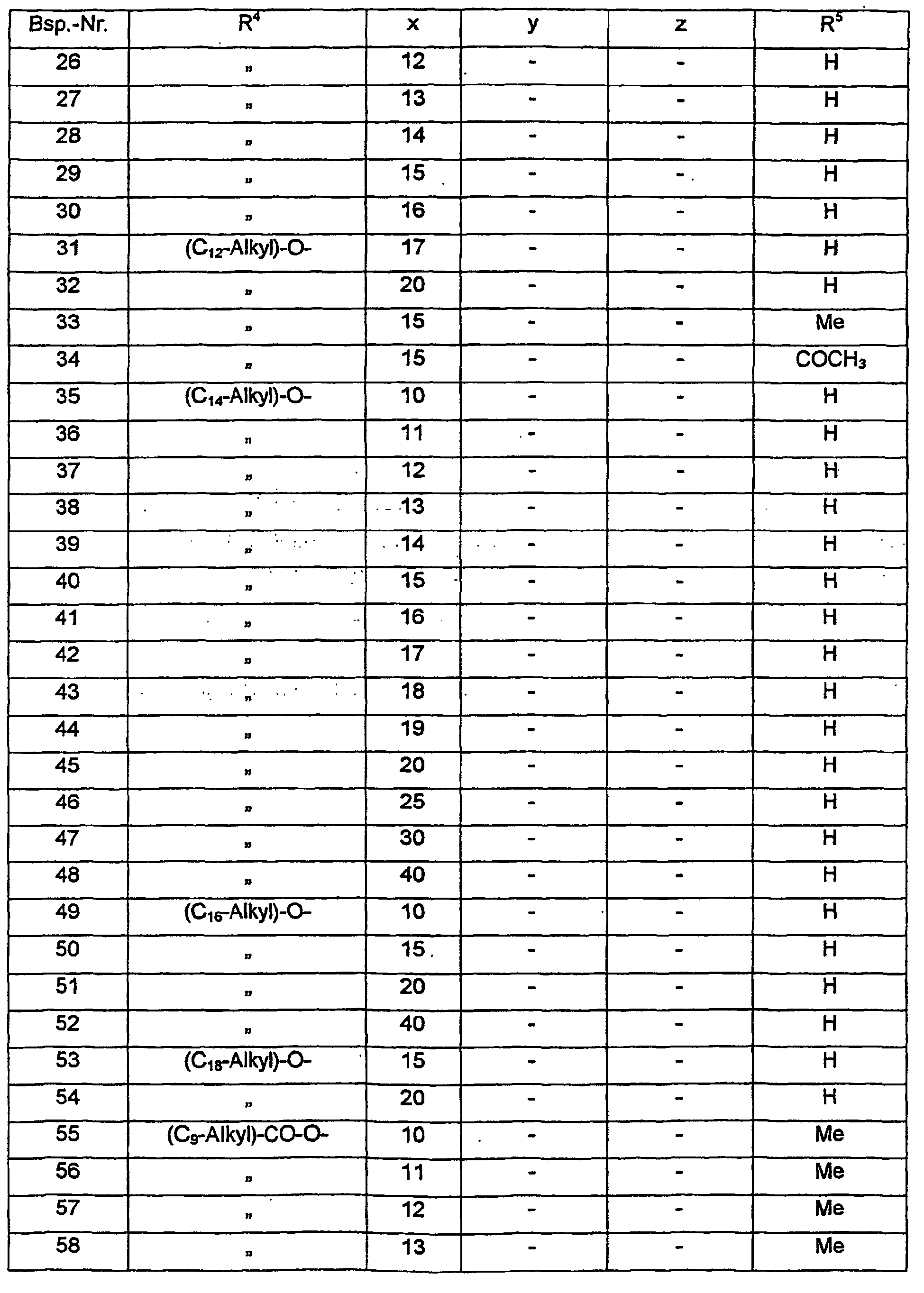

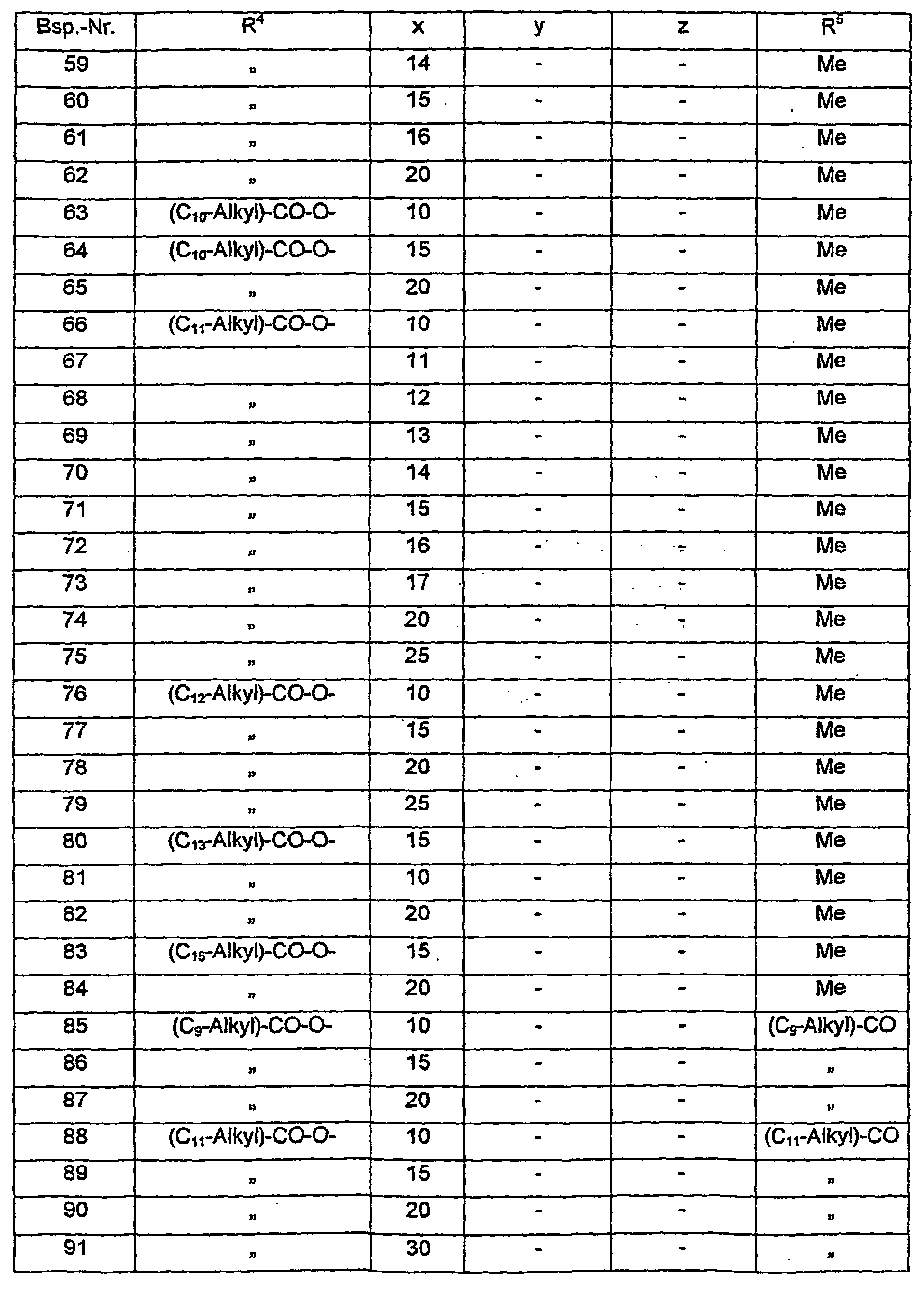

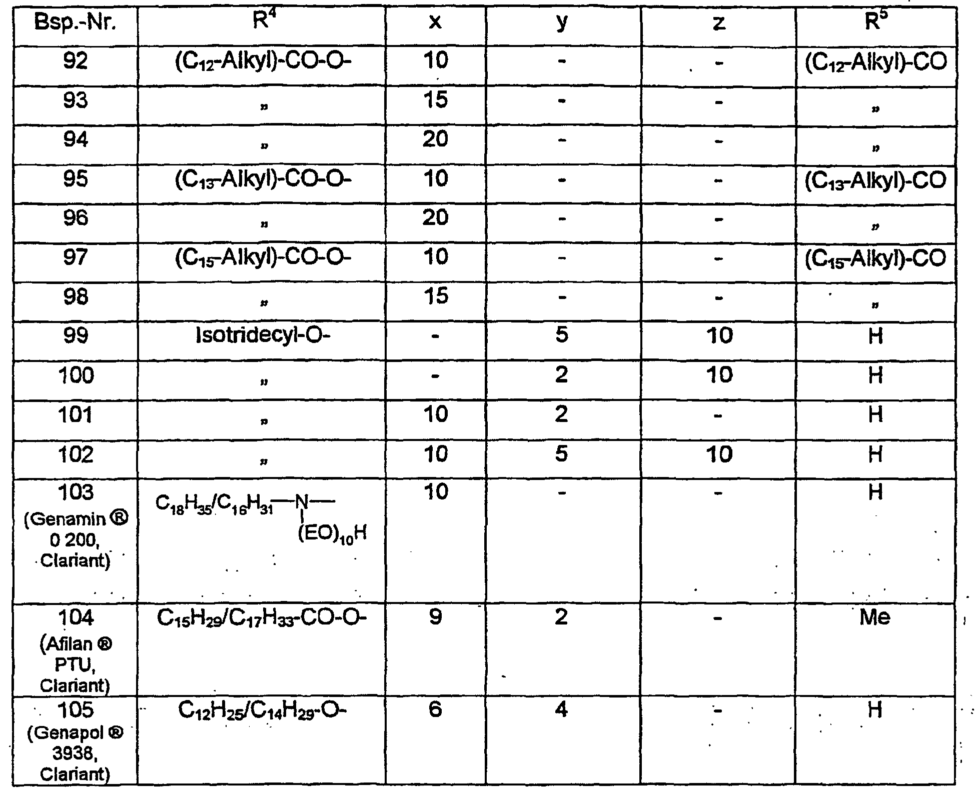

Die Sulfonylharnstoffe der Formel (I) können Salze bilden, bei denen der Wasserstoff der -SO₂-NH-Gruppe durch ein für die Landwirtschaft geeignetes Kation ersetzt ist. Diese Salze sind beispielsweise Metall-, insbesondere Alkalisalze (z.B. Na- oder K-Salze) oder Erdalkalisalze, oder auch Ammoniumsalze oder Salze mit organischen Aminen. Ebenso kann Salzbildung durch Anlagerung einer starken Säure an den Heterocyclenteil der Verbindungen der Formel (I) erfolgen. Geeignet hierfür sind z. B. HCl, HNO₃, Trichloressigsäure, Essigsäure oder Palmitinsäure. Besonders vorteilhafte Verbindungen sind solche, bei denen das Salz des Herbizids der Formel (I) durch Ersatz des Wasserstoffs der -SO₂-NH-Gruppe durch ein Kation z.B. aus der Gruppe der Alkalimetalle, Erdalkalimetalle und Ammoniumionen, bevorzugt Natrium oder Tetrabutylammonium gebildet wird.

Sofern die Sulfonythamstoffe der Formel (I) und/oder deren Salze ein oder mehrere asymetrische C-Atome oder auch Doppelbindungen enthalten, die in der allgemeinen Formel nicht gesondert angegeben sind, sind diese doch von Formel (I) umfaßt. Die durch ihre spezifische Raumform definierten möglichen Stereoisomeren, wie Enantiomere, Diastereoisomere, Z- und E-Isomere sind alle von der Formel (I) umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden. Die genannten Stereoisomeren in reiner Form als auch ihre Gemische können somit erfindungsgemäß eingesetzt werden.

Sulfonyharnstoffe der Formel (I) und deren Salze sind zwar grundsätzlich bekannt (siehe z. B. EP-A-342 569, EP-A-574 418, EP-A-723 534 und EP-A-757 679 auf die hiermit ausdrücklich Bezug genommen wird), deren herausragende Eignung als Kombinationspartner in Mischungen mit Tensiden B) ist dem Stand der Technik allerdings nicht entnehmbar.

Bevorzugt sind Sulfonylharnstoffe der allgemeinen Formel (I) und/oder deren Salze, worin
a) R¹ gleich CO-(C₁-C₄-Alkoxy) ist und R² gleich Halogen, vorzugsweise Jod ist, oder R² gleich CH₂-NHR^{e} ist, worin R^{e} ein Acylrest, vorzugsweise C₁-C₄-AlkylSulfonyl ist, oder
b) R¹ gleich CO-N(C₁-C₄-Alkyl)₂ und R² gleich NHR^{e} ist, worin R^{e} ein Acylrest, vorzugsweise Formyl ist.

Bei Sulfonythamstoffen der allgemeinen Formel (I) und/oder deren Salzen, befindet sich der Rest R² in para-Stellung zum Rest R¹.

Als Beispiele für Verbindungen der Formel (I) und/oder ihre Salze seien genannt:
- A1 =: N-(4,6-Dimethoxypyrimidin-2-ylaminocarbonyl)-2-methoxycarbonyl-5-acetylamino-benzolsulfonamid
- A2 =: N-(4,6-Dimethoxypyrimidin-2-ylaminocarbonyl)-2-methoxycarbonyl-5-(N-formyl-N-methyl-aminomethyl)-benzolsulfonamid-natriumsalz
- A3 =: N-(4,6-Dimethoxypyrimidin-2-ylaminocarbonyl)-2-methoxycarbonyl-5-acetylamino)-benzolsulfonamid-natriumsalz
- A4 =: N-(4,6-Dimethoxypyrimidin-2-yl-aminocarbonyl)-2-methoxycarbonyl-5-(N-methyl-N-propionyl-amino)-benzolsulfonamid-natriumsalz
- A5 =: N-(4,6-Dimethoxypyrimidin-2-ylaminocarbonyl)-2-methoxycarbonyl-5-(N-isopropionyl-methylamino)-benzolsulfonamid-natriumsalz
- A6 =: N-(4,6-Dimethoxypyrimidin-2-ylaminocarbonyl)-2-methoxycarbonyl-5-(N-methoxycarbonyl-aminomethyl)-benzolsulfonamid-natriumsalz
- A7 =: N-(4,6-Dimethoxypyrimidin-2-ylaminocarbonyl)-2-(N,N-dimethylaminocarbonyl)-5-(N-methoxycarbonyl-amino)-benzolsulfonamidnatriumsalz
- A8 =: N-(4,6-Dimethoxypyrimidin-2-ylaminocarbonyl)-2-(N,N-dimethylaminocarbonyl)-5-(N-formyl-amino)-benzolsulfonamid (Foramsulfuron)
- A9 =: N-(4,6-Dimethoxypyrimidin-2-yl-aminocarbonyl)-2-(N,N-dimethylaminocarbonyl)-5-(N-propionyl-amino)-benzolsulfonamid-natriumsalz
- A10 =: N-(4,6-Dimethoxypyrimidin-2-yl-aminocarbonyl)-2-methoxycarbonyl-5-(N-methylsulfonyl-aminomethyl)-benzolsulfonamid-natriumsalz (Mesosulfuron-methyl-Natrium)
- A11 =: N-(4,6-Dimethoxypyrimidin-2-yl-aminocarbonyl)-2-methoxycarbonyl-5-(N-methylsulfonyl-aminomethyl)-benzolsulfonamid (Mesosulfuron-methyl)
- A12 =: N-(4,6-Dimethoxypyrimidin-2-yl-aminocarbonyl)-2-methoxycarbonyl-5-(N-methoxycarbonyl-aminomethyl)-benzolsulfonamid-natriumsalz
- A 13 =: N-(4-methoxy-6-methyl-1,3,5-triazin-2-yl-aminocarbonyl)-2-methoxycarbonyl-5-iod-benzolsulfonamid (Iodosulfuron-methyl)
- A 14 =: N-(4-methoxy-6-methyl-1,3,5-triazin-2-yl-aminocarbonyl)-2-methoxycarbonyl-5-iod-benzolsulfonamid-natriumsalz (Iodosulfuron-methyl-Natrium)
- A 15 =: N-(4,6-Dimethoxyprimidin-2-yl-aminocarbonyl)-2-methoxycarbonyl-5-(N-methylsulfonyl-N-methyl-aminomethyl)-benzolsulfonamid
- A 16 =: N-(4,6-Dimethoxypyrimidin-2-ylaminocarbonyl)-2-(N,N-dimethylaminocarbonyl)-5-(N-formyl-amino)-benzolsulfonamid-natriumsalz (Foramsulfuron-Natrium)

Es können als Komponente A) auch Mischungen zweier oder mehrerer Sulfonylharnstoffe der Formel (I) und/oder ihrer Salze verwendet werden. Beispiele solcher Mischungen sind Mischungen zweier oder mehrerer der vorgängig genannten Verbindungen A1 bis A 15 wie A8 + A13, A8 + A14, A10 + A13, A10 + A14, A11 + A13 oder A11 + A14.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z. B. der Rest einer Carbonsäure und Reste davon abgeleiteter Säuren wie der Thiocarbonsäure, gegebenenfalls
N-substituierten Iminocarbonsäuren oder die Reste von Kohlensäuremonoestem, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀₋Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.

Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁₋C₄(Alkylsulfinyl), N-Alkyl-1-iminoalkyl, wie N-(C₁-C₄)-1-imino-(C₁-C₄)alkyl und andere Reste von organischen Säuren.

Kohlenstoffhaltige Reste sind organische Reste, die mindestens ein Kohlenstoffatom, vorzugsweise 1 bis 40 C-Atome, besonders bevorzugt 1 bis 30 C-Atome, ganz besonders bevorzugt 1 bis 20 C-Atome und außerdem mindestens ein Atom eines oder mehrerer anderer Elemente des Periodensystems der Elemente wie H, Si, N, P, O, S, F, Cl, Br oder J enthalten. Beispiele für kohlenstoffhaltige Reste sind unsubstituierte oder substituierte Kohlenwasserstoffreste, die direkt oder über ein Heteroatom wie Si, N, S, P oder O an den Grundkörper gebunden sein können, unsubstituierte oder substituierte Heterocyclylreste, die direkt oder über ein Heteroatom wie Si, N, S, P oder O an den Grundkörper gebunden sein können, kohlenstoffhaltige Acylreste oder Cyano.
Unter dem Begriff Heteroatom werden von Kohlenstoff und Wasserstoff verschiedene Elemente des Periodensystems der Elemente verstanden, z.B. Si, N, S, P, O, F, Cl, Br oder J.

Kohlenwasserstoff(oxy)reste sind geradkettige, verzweigte oder cyclische und gesättigte oder ungesättigte aliphatische oder aromatische Kohlenwasserstoff(oxy)reste, z.B. Alkyl, Alkenyl, Alkinyl, Cycloalkyl, Cycloalkenyl oder Aryl und die diesen Kohlenwasserstoffresten entsprechenden Kohlenwasserstoffoxyreste wie Alkoxy, Alkenyloxy, Alkinyloxy, Cycloalkoxy, Cycloalkenyloxy oder Aryloxy; Aryl bedeutet dabei ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl; vorzugsweise bedeutet ein Kohlenwasserstoffrest Alkyl, Alkenyl oder Alkinyl mit 1 bis 30 C-Atomen oder Cycloalkyl mit 3, 4, 5, 6 oder 7 Ringatomen oder Phenyl.

Substituierte Reste, wie substituierte Kohlenwasserstoff(oxy)reste, z.B. substituiertes Alkyl, Alkenyl, Alkinyl, Cycloalkyl, Cycloalkenyl oder Aryl, und die diesen Kohlenwasserstoffresten entsprechenden Kohlenwasserstoffoxyreste wie Alkoxy, Alkenyloxy, Alkinyloxy, Cycloalkoxy, Cycloalkenyloxy oder Aryloxy, oder substituierte Heterocydylreste, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor. Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Ein heterocyclischer Rest oder Ring (Heterocyclylrest) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatome und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclischer aromatisches System, in dem mindestens 1 Ring ein oder mehrere Hereoatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl; Pyrrolidyl, Piperidyl, Piperanzinyl, Dioxolanyl, Morpholinyl, Tetrahydrofuryl. Als Substituenten für einen substituierten heterocyclischen Rest kommen die oben genannten Substituenten in Frage, zusätzlich auch Oxo. Die Oxogruppe kann auch an den Heteroringatomen, die in verschiedenen Oxidationsstufen existieren können, z.B. bei N und S, auftreten.

Halogen bedeutet beispielsweise Fluor, Chlor, Brom oder lod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Die erfindungsgemäßen herbiziden Mittel, enthaltend Verbindungen der Formel (I) und/oder ihre Salze und Tenside B) zeigen eine ausgezeichnete herbizide Wirkung und in einer bevorzugten Ausführungsform überadditive Effekte. Aufgrund der verbesserten Kontrolle der Schadpflanzen durch die erfindungsgemäßen herbiziden Mittel wird es möglich, die Aufwandmenge zu senken und/oder die Sicherheitsmarge zu erhöhen. Beides ist sowohl ökonomisch als auch ökologisch sinnvoll. Die Wahl der von den Komponenten A) + B) einzusetzenden Mengen und das Verhältnis der Komponenten A): B) sind dabei von einer ganzen Reihe von Faktoren abhängig.

In bevorzugter Ausführungsform kennzeichnen sich erfindungsgemäße herbizide Mittel dadurch, daß sie einen synergistisch wirksamen Gehalt einer Kombination der Verbindungen der Formel (I) und / oder deren Salze mit Tensiden B) aufweisen. Dabei ist vor allem hervorzuheben, daß selbst in Kombinationen mit Aufwandmengen oder Gewichtsverhältnissen von A): B) bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Die Komponenten A) und B) der erfindungsgemäßen herbiziden Mittel können separat formuliert und im Tank-Misch-Verfahren appliziert werden, oder sie können zusammen in einer Fertigformulierung enthalten sein, die dann in üblicher Weise beispielsweise in Form einer Spritzbrühe appliziert werden kann.

Die erfindungsgemäßen herbiziden Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate (SL), emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse. Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.
Die notwendigen Formulierungshilfsmittel wie Inertmaterialien, Tenside,
Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen, von der Komponente A) verschiedene agrochemischen Wirkstoffen wie Insektiziden, Akariziden, Herbiziden, Fungiziden, Safenem, Düngemitteln wie Ammoniumsulfat, Ammoniumhydrogensulfat, Harnstoff oder Mischungen davon, und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff A) und / oder dem Tensid B) außer einem Verdünnungs- oder Inertstoff noch von Tensid B) verschiedene Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2^{I}-dinaphthylmethan-6,6^{I}-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe A) und / oder Tenside B) beispielsweise in üblichen Apparaturen wie Hammermühlen, Gebläsemühlen und Luftstrahlmühlen feingemahlen und gleichzeitig oder anschließend mit den Fonnulierungshilfsmitteln vermischt

Emulgierbare Konzentrate werden durch Auflösen des Wirkstoffes A) und / oder des Tensids B) in einem organischen Lösungsmittel, z.B. 3-Methoxypropanol, Mono-, Di-, oder Oligoester wie Malonsäuredimethylester, Bemsteinsäuredimethylester, Glutarsäuredimethylester oder Adipinsäuredimethylester, Butanol, Cyclohexanon, Dimethylformamid, Xylol oder auch höhersiedenden Aromaten, Ölen (wie Sojaölmethylester oder Rapsölmethylester) oder Kohlenwasserstoffen oder Mischungen der organischen Lösungsmittel unter Zusatz von einem oder mehreren von Tensid B) verschiedenen Tensiden ionischer und/oder nichtionischer Art (Emulgatoren) hergestellt. Als Emulgatoren können beispielsweise verwendet werden: Alkylarytsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester (z.B. Atplus® 309F von Uniquema) oder auch Blockcopolymere, z.B. auf Basis von Ethylenoxid und Propylenoxid.

Wasserlösliche Konzentrate werden beispielsweise erhalten, indem der Wirkstoff A) und / oder das Tensid B) in Wasser oder in einem mit Wasser mischbaren Solvens gelöst wird und gegebenenfalls mit weiteren Hilfsstoffen wie wasserlöslichen Tensiden versetzt wird.

Stäubemittel erhält man durch Vermahlen des Wirkstoffes A) und / oder des Tensids B) mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls unter Zusatz von Tensid B) verschiedener Tenside, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischem unter Verwendung von wäßrigen organischen Lösungsmitteln und gegebenenfalls von Tensid B) verschiedenen Tensiden, wie sie z.B. oben bei den anderen Formulierungstypen bereits aufgeführt sind, herstellen.
Granulate können entweder durch Verdüsen des Wirkstoffes A) und / oder Tensids B) auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe A) und / oder Tenside B) in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt.

Zur Herstellung von Teller-, Fließbett-, Extruder- und Sprühgranufate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die erfindungsgemäßen herbiziden Mittel enthalten in der Regel 0,01 bis 99 Gew.-%, insbesondere 0,1 bis 95 Gew.-%, eines oder mehrerer Sulfonylharnstoffe der Formel (I) und/oder ihrer Salze.

In Spritzpulvern beträgt die Wirkstoffkonzentration z.B. etwa 10 bis 90 Gew.-%, der Rest zu 100 Gew.-% besteht aus üblichen Formulierungsbestandteilen und gegebenenfalls Tensiden B). Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0.05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-°%, vorzugsweise zwischen 10 und 80 Gew.-%.

Daneben enthalten die genannten Wirkstofformulierungen gegebenenfalls die jeweils üblichen Hilfsstoffe wie Haft-, Netz-, Dispergier-, Emulgier-, Penetrations-, Konservierungs-, Frostschutz- und Lösungsmittel, Füll-, Träger- und Farbstoffe, Entschäumer, Adjuvants wie Mineral- oder Pflanzenöle und deren Derivate, Verdunstungshemmer und den pH-Wert und die Viskosität beeinflussende Mittel.

Die erfindungsgemäßen herbiziden Mittel lassen sich durch übliche Verfahren herstellen, z.B. durch Vermischen der Komponenten mit Hilfe von Rührem, Schüttlem oder (statischen) Mischern.

Eine bevorzugte Ausführungsvariante dieser Erfindung besteht darin, daß Formulierungen, die Sulfonylharnstoffe der Formel (I) und/oder deren Salze enthalten, im Spritztank mit Tensiden B) und / oder deren Formulierungen gemischt werden. Die Sulfonylharnstoffe der Formel (I) und/oder deren Salze lassen sich hierzu beispielsweise auf Basis von Kaolin als wasserdispergierbare Granulate formulieren, wobei der Gehalt an Sulfonylharnstoffen der Formel (I) und/oder deren Salzen in weiten Bereichen zwischen 0,01 und 99 Gew.-%, vorzugsweise zwischen 0,5 und 80 Gew.%, schwanken kann. Diese Formulierungen können neben den Sulfonylharnstoffen der Formel (I) und/oder deren Salze weitere agrochemische Wirkstoffe, wie Safener enthalten, z.B. in einem Gehalt 0,1 - 50 Gew.-%, vorzugsweise 0,5 - 40 Gew.-%. Die Tenside B) können als Reinsubstanzen oder in formulierter Form, vorzugsweise als flüssiges Produkt wie wasserlösliche Konzentrate oder emulgierbare Konzentrate, zugesetzt werden.

Fertigformulierungen können erhalten werden, indem z.B. emulgierbare Konzentrate oder Öldispersionen aus Sulfonylharnstoffen der Formel (I) und/oder deren Salzen, Tensiden B) und weiteren Hilfsstoffen hergestellt werden. In den Fertigformulierungen kann der Gehalt an Sulfonylharnstoffen der Formel (I) und/oder deren Salzen in weiten Bereichen schwanken und beträgt im allgemeinen zwischen 0,01 und 99 Gew.-%, vorzugsweise zwischen 0,1 und 60 Gew.-%. Der Gehalt an Tensiden B) kann ebenfalls in weiten Bereichen schwanken und beträgt im allgemeinen zwischen 1 und 80 Gew.-%, in der Regel zwischen 5 und 50 Gew.%. Schließlich können die Fertigformulierungen auch weitere agrochemische Wirkstoffe wie Safener enthalten, z.B. in einem Gehalt von 0,01-60 Gew.-%, vorzugsweise 0,1-40 Gew.-%.

Die Formulierungen können gegebenenfalls Hilfsstoffe wie Lösungsmittel enthalten, z.B. aromatische Lösungsmittel wie Xylole oder Aromatengemische aus der Solvesso®-Reihe wie Solvesso® 100, Solvesso® 150 oder Solvesso® 200 von Exxon; alphatische oder isoparaffinische Lösemittel wie Produkte aus der Exxol®-D- bzw. Isopur®-Reihe von Exxon; Öle pflanzlicher oder tierischer Herkunft sowie deren Derivate, wie Rapsöle oder Rapsöl-methylester ; Ester wie Butyl-Acetat; Ether wie Diethylether, THF oder Dioxan. Der Lösungsmittelgehalt beträgt bevorzugt 1-95 Gew.-%, besonders bevorzugt 5-80 Gew.-%. Weitere geeignete Hilfstoffe sind z.B. Emulgatoren (bevorzugter Gehalt: 0,1-10 Gew.-%), Dispergatoren (bevorzugter Gehalt: 0,1-10 Gew.-%) und Verdicker (bevorzugter Gehalt 0,1 - 5 Gew.-%), sowie gegebenenfalls Stabilisatoren wie Entschäumer, Wasserfänger, Säurefänger und Kristallisationsinhibitoren.

Der Einsatz der erfindungsgemäßen herbiziden Mittel kann im Vor- oder im Nachauflaufverfahren erfolgen, z. B. durch Spritzung. Durch den Einsatz der Mischungen kann der zur Unkrautbekämpfung notwendige Präparateaufwand wesentlich reduziert werden.

Die erfindungsgemäß zu verwendenden Tenside B) werden in der Regel zusammen mit dem bzw. den Sulfonylharnstoffen A) oder unmittelbar hintereinander ausgebracht, vorzugsweise in Form einer Spritzbrühe, welche die Tenside B) und die Sulfonylharnstoffe A) in wirksamen Mengen und gegebenenfalls weitere übliche Hilfsmittel enthält. Die Spritzbrühe wird bevorzugt auf Basis von Wasser und/oder einem Öl, z.B. einem hochsiedenden Kohlenwasserstoff wie Kerosin oder Paraffin hergestellt. Dabei können die erfindungsgemäßen herbiziden Mittel als Tankmischung oder über eine "Fertig-Formulierung" realisiert werden.

Das Gewichtsverhältnis von Sulfonylharnstoff A) zu Tensid B) kann in einem weiten Bereich variieren und hängt z.B. von der Wirksamkeit des Sulfonylhamstoffs ab. In der Regel ist es im Bereich von 10:1 bis 1:5000, vorzugsweise 4:1 bis 1:2000.

Die Aufwandmengen der Verbindung(en) der Formel (I) und/oder deren Salze liegen im allgemeinen zwischen 0,1 und 200 g AS/ha (AS = Aktivsubstanz, d. h. Aufwandmenge bezogen auf den aktiven Wirkstoff), bevorzugt zwischen 0,5 und 100 g ai/ha. Die Aufwandmengen an Tensiden B) liegen im allgemeinen zwischen 1 und 5000 g Tensid / ha, bevorzugt werden 10 und 2000g Tensid / ha.

Die Konzentration der efindungsgemäß zu verwendenden Tenside B) ist in einer - Spritzbrühe in der Regel von 0,05 bis 4 Gew.-%, vorzugsweise 0,1 bis 1 Gew.-%, insbesondere 0,1 bis 0,3 Gew.-% Tensid.

Die erfindungsgemäßen herbiziden Mittel, weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Avena, Lolium, Alopecurus, Phalaris, Echinochloa, Digitaria, Setaria sowie Cyperusarten aus der annuellen Gruppe und auf seiten der perennierenden Spezies Agropyron, Cynodon, Imperata sowie Sorghum und auch ausdauemde Cyperusarten gut erfaßt.

Bei dikotylen Unkrautarten erstreckt sich das Wirkungsspektrum auf Arten wie z.B. Galium, Viola, Veronica, Lamium, Stellaria, Amaranthus, Sinapis, Ipomoea, Matricaria, Abutilon und Sida auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, insbesondere Soja, oder Gramineen-Kulturen wie Weizen, Gerste, Roggen, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflarizeninhaltsstoffen und zur Emteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren.

Andere besondere Eigenschaften betreffen z. B. das Emtegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Mittel in wirtschaftlich bedeutenden transgenen Kulturen von Nutz- und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist somit auch die Verwendung der erfindungsgemäßen Mittel als Herbizide zur Bekämpfung von Schadpflanzen, vorzugsweise in Pflanzenkulturen, wobei die Pflanzenkulturen auch transgene Pflanzenkulturen sein können.

Die erfindungsgemäßen herbiziden Mittel können auch nicht-selektiv zur Bekämpfung unerwünschten Pflanzenwuchses eingesetzt werden; z.B. an Wegrändern, Plätzen, Industrieanlagen oder Eisenbahnanlagen.

Aufgrund der relativ geringen Aufwandmenge der erfindungsgemäßen herbiziden Mittel ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Um die Verträglichkeit und/oder Selektivität der erfindungsgemäßen herbiziden Mittel gewünschtenfalls noch zu steigern kann es von Vorteil sein, diese gemeinsam in Mischung oder zeitlich - getrennt nacheinander zusammen mit Safenem oder Antidots anzuwenden.

Als Safener oder Antidots für die erfindungsgemäßen herbiziden Mittel in Frage kommende Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91108202) und PCT/EP 90102020 (WO-911078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

In einer bevorzugten Ausführungsform enthalten die herbiziden Mittel der vorliegenden Erfindung daher einen zusätzlichen Gehalt an C) einer oder mehrerer Verbindungen, die als Safener oder Antidots wirken.

Bevorzugte Antidots oder Safener oder Gruppen von Verbindungen die sich als Safener oder Antidots in den erfindungsgemäßen herbiziden Mitteln eignen sind unter anderem:
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (Mefenpyr-diethyl, Verbindung C1 -1) und verwandte Verbindungen, wie sie in der internationalen Anmeldung WO 91/07874 (PCT/EP 90102020) beschrieben sind;
b) Derivate der Dichlorphenylpyrazolcarbonsäure, vorzugsweise Verbindungen wie 1-(2,4-Dichlorphenyl)-5-methyl-pyrazol-3-carbonsäureethylester (Verbindung C1-2), 1-(2,4-Dichlorphenyl)-5-isopropyl-pyrazol-3-carbonsäureethylester (Verbindung C1-3), 1-(2,4-Dichlorphenyl)-5-(1,1-dimethyl-ethyl)pyrazol-3-carbonsäureethylester (Verbindung C1-4), 1-(2,4-Dichlorphenyl)-5-phenyl pyrazol-3-carbonsäureethylester (Verbindung C1-5) und verwandte Verbindungen, wie sie in EP-A-0 333131 und EP-A-0 269 806 beschrieben sind;
c) Verbindungen vom Typ der Triazolcarbonsäuren, vorzugsweise Verbindungen wie 1-(2,4-Dichlorphenyl)-5-trichlormethyl-(1 H)-1,2,4-triazol-3-carbonsäureethylester (Verbindung C1-6, Fenchlorazol-ethyl) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung C1 -7) oder 5-Phenyl-2-isoxazolin-3-carbonsäureethylester (Verbindung C1 -8) und verwandte Verbindungen wie sie in der internationalen Patentanmeldung WO 91/08202 (PCT/EP 90/01966) beschrieben sind;
e) Verbindungen vom Typ der 8-Chinolinoxyessigsäure, vorzugsweise Verbindungen wie (5-Chlor-8-chinolinoxy)-essigsäure-(1 -methyl-hex-1 -yl)-ester (Cloquintocet -mexyl, C2-1), (5-Chlor-8-chinolinoxy)-essigsäure-(1,3-dimethyl-but-1-yl)- ester (C2-2), (5-Chlor-8-chinolinoxy)-essigsäure-4-allyl-oxy-butylester (C2-3), (5-Chlor-8-chinolinoxy)-essigsäure-1 -allyl-oxy-prop-2-ylester (C2-4), (5-Chlor-8-chinolinoxy)-essigsäureethylester (C2-5), (5-Chlor-8-chinolinoxy)-essigsäuremethylester (C2-6), (5-Chlor-8-chinolinoxy)-essigsäureallylester (C2-7), (5-Chlor-8-chinolinoxy)-essigsäure-2-(2-prpyliden-iminoxy)-1-ethylester (C2-8), (5-Chlor-8-chinolinoxy)-essigsäure-2-oxo-prop-1 -ylester (C2-9) und verwandte Verbindungen wie sie in EP-A-0 086 750, EP-A-0 094 349 und EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallyester, (5-Chlor-8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba);
h) Verbindungen vom Typ der 5,5-Diphenyl-2-isoxazolin-3-carbonsäure, vorzugsweise 5,5-Diphenyl-2-isoxazolin-3-carbonsäureethylester (Isoxadifenethyl, C3-1);
i) Verbindungen, die als Safener z.B. für Reis bekannt sind wie Fenclorim (= 4,6-Dichlor-2-phenylpyrimidin, Pesticide Manual, 11. Auflage, 1997, S. 511-512), Dimepiperate (= Piperidin-1 -thiocarbonsäure-S-1 -methyl-1 -phenylethylester, Pesticide Manual, 11. Auflage, 1997, S. 404-405), Daimuron (= 1 -(1 -Methyl-1-phenylethyl)-3-p-tolyl-hamstoff, Pesticide Manual, 11. Auflage, 1997, S. 330), Cumyluron (= 3-(2-Chlorphenylmethyl)-1 -(1 -methyl-1-phenyl-ethyl)- hamstoff, JP-A-601087254), Methoxyphenon (= 3,3'-Dimethyl-4-methoxy- benzophenon, CSB (= 1-Brom-4-(chlormethylsulfonyl)-benzol, CAS-Reg. Nr. 54091-06-4).

Die genannten Verbindungen sind außerdem zumindest teilweise in der EP-A-0 640 587 beschrieben, auf die hiermit zu Offenbarungszwecken Bezug genommen wird.
j) Eine weitere wichtige Gruppe von als Safenem und Antidoten geeignete Verbindungen ist aus der WO 95107897 bekannt.

Die Safener (Antidote) der vorstehenden Gruppen a) bis j) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen herbiziden Mittel erheblich erweitert werden und insbesondere ist durch die Verwendung von Safenem der Einsatz von Kombinationen möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die herbiziden Mittel gemäß der Erfindung und die erwähnten Safener können zusammen (als fertige Formulierung oder im Tankmisch-Verfahren) oder in beliebiger Reihenfolge nacheinander ausgebracht werden. Das Gewichtsverhältnis Safener:Herbizid (Verbindung(en) der Formel (I) und/oder ihre Salze) kann innerhalb weiter Grenzen variieren und liegt vorzugsweise im Bereich von 1 : 100 bis 100 : 1, insbesondere von 1 : 10 bis 10: 1. Die jeweils optimalen Mengen an Herbizid(en) und Safener(n) sind üblicherweise vom Typ des herbiziden Mittels und/oder vom verwendeten Safener sowie von der Art des zu behandelnden Pflanzenbestandes abhängig.

Die Safener vom Typ C) können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden.

Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und liegen in der Regel im Bereich von 0,001 bis 1 kg, vorzugsweise 0,005 bis 0,2 kg Wirkstoff je Hektar.

Gegenstand der vorliegenden Erfindung ist auch ein Verfahren zur Bekämpfung von unerwünschten Pflanzen, vorzugsweise in Pflanzenkulturen, das dadurch gekennzeichnet ist, daß eine herbizid wirksame Menge des erfindungsgemäßen herbiziden Mittels auf die Pflanzen, Pflanzenteile, Pflanzensamen oder die Anbaufläche ausgebracht wird.
Eine bevorzugte Verfahrensvariante ist die Ausbringung der erfindungsgemäßen herbiziden Mittel in Form von Tankmischungen, wobei die Einzelkomponenten, z.B. in Form von Formulierungen, gemeinsam im Tank mit Wasser oder einem Öl gemischt werden und die erhaltene Spritzbrühe ausgebracht wird. Da die Kulturpflanzenverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel daher zur selektiven Bekämpfung unerwünschter Pflanzen eingesetzt.

Die Ausbringung der erfindungsgemäßen herbiziden Mittel kann in üblicher Weise erfolgen, zum Beispiel mit Wasser und / oder Öl als Träger in Spritzbrühmengen von etwa 0,5 - 4000, vorzugsweise 100 bis 1000 Liter/ha. Eine Anwendung der Mittel im sog. Low-Volume- und Ultra-Low-Volume-Verfahren (ULV) ist ebenso möglich wie ihre Applikation in Form von Granulaten und Mikrogranulaten.

Eine bevorzugte Verwendung betrifft den Einsatz von herbiziden Mitteln, die Gehalte von A- und B-Komponenten in einer synergistisch wirksamen Menge aufweisen.

Zur Erfindung gehören auch herbizide Mittel, enthaltend Mischungen von einem oder mehreren Kombinationspartnem A), vorzugsweise A8, A10, A11, A 13, A14 und/oder A16 und einem oder mehreren Kombinationspartnem B), gegebenenfalls in Kombination mit einem oder mehreren Safenem C).

Als bevorzugte Beispiele für die erfindungsgemäßen herbiziden Mittel seien folgende Kombinationen von A8, A10, A11, A13, A14 und/oder A16, mit Tensiden B) genannt, ohne daß dadurch eine Einschränkung auf die explizit genannten Kombinationen erfolgen soll:
- A8: in Kombination mit einem der Tenside aus der Gruppe B1 bis B105 (siehe Tabelle 1)
- A10: in Kombination mit einem der Tenside aus der Gruppe B1 bis B105 (siehe Tabelle 1)
- A11: in Kombination mit einem der Tenside aus der Gruppe B1 bis B105 (siehe Tabelle 1)
- A13: in Kombination mit einem der Tenside aus der Gruppe B1 bis B105 (siehe Tabelle 1)
- A14: in Kombination mit einem der Tenside aus der Gruppe B1 bis B105 (siehe Tabelle 1)
- A16: in Kombination mit einem der Tenside aus der Gruppe B1 bis B105 (siehe Tabelle 1)
- A8 + A13: in Kombination mit einem der Tenside aus der Gruppe B1 bis B105 (siehe Tabelle 1)
- A8 + A14: in Kombination mit einem der Tenside aus der Gruppe B1 bis B105 (siehe Tabelle 1)
- A11 + A13: in Kombination mit einem der Tenside aus der Gruppe B1 bis B105 (siehe Tabelle 1)
- A11 + A14: in Kombination mit einem der Tenside aus der Gruppe B1 bis B105 (siehe Tabelle 1)

In den aufgeführten Kombinationen kann der Einsatz eines Safeners Vorteile bieten, da hierdurch mögliche Schäden an der Kulturpflanze, die durch Sulfonylhamstoffderivate oder andere herbizid wirksame Wirkstoffe entstehen können, verringert werden können.

Daneben können in den herbiziden Mitteln der vorliegenden Erfindung zur Abrundung der Eigenschaften, im allgemeinen in untergeordneten Mengen, zusätzlich einer, zwei oder mehrere von der Komponente A) verschiedene agrochemische Wirkstoffe (z.B. Herbizide, Insektizide oder Fungizide) enthalten sein.

Damit ergeben sich zahlreiche Möglichkeiten mehrere Wirkstoffe miteinander zu kombinieren und gemeinsam zur Bekämpfung von Schadpflanzen, vorzugsweise in Pflanzenkulturen einzusetzen, ohne vom Gedanken der Erfindung abzuweichen.

Zusammenfassend kann gesagt werden, daß bei gemeinsamer Anwendung von Sulfonylharnstoffen der Formel (I) und/oder ihren Salzen mit einem oder mehreren Tensiden B) eine ausgezeichnete herbizide Wirkung erzielt wird. Dabei ist die Wirkung der erfindungsgemäßen herbiziden Mittel in einer bevorzugten Ausführungsform stärker als die Wirkung der eingesetzten Einzelkomponenten bei alleiniger Anwendung.

Diese Effekte erlauben unter anderem eine Reduzierung der Aufwandmenge, die Bekämpfung eines breiteren Spektrums von Unkräutern und Ungräsem, die Schließung von Wirkungslücken, auch hinsichtlich resistenter Arten, eine schnellere und sicherere Wirkung, eine längere Dauerwirkung, eine komplette Kontrolle der Schadpflanzen mit nur einer oder wenigen Applikationen, und eine Ausweitung des Anwendungszeitraumes. Außerdem weisen die erfindungsgemäßen herbiziden Mittel eine verbesserte Selektivität in Kulturpflanzen auf.

Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen. Darüberhinaus gestatten die erfindungsgemäßen Kombinationen in hervorragender Weise die Bekämpfung ansonsten resistenter Schadpflanzen.

### Beispiele

Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im Dreiblattstadium behandelt. Die als Spritzpulver bzw. als Emulsionskonzentrate formulierten herbiziden Mittel wurden mit einer Wasseraufwandmenge von umgerechnet 600 - 800l/ha auf die grünen Pflanzenteile gesprüht. Nach ca. 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert. Die Ergebnisse sind in der nachfolgenden Tabelle 1 zusammengestellt. Die erfindungsgemäßen herbiziden Mittel weisen eine ausgezeichnete herbizide Wirksamkeit gegen wirtschaftlich wichtige Schadpflanzen auf.

**Tabelle 1**

| Wirkstoff/Tensid | g S / ha | g Tensid / ha | Schädigung in % an ECHCG |
|---|---|---|---|
| A8 / Genapol ® X150 | 2.5 | 2000 | 94 |
| A8 / Genapol ® X 060 | 2,5 | 2000 | 0 |

| | | |
|---|---|---|
| Abkürzungen: | g AS/ha: | Gramm Aktivsubstanz / Hektar |
| | ECHCG: | Echinochloa crus galli |
| | A8: | Foramsulfuron |
| | Genapol® X 150: | Tensid mit 15 Ethylenoxideinheiten |
| | Genapol® X 060: | Tensid mit 6 Ethylenoxideinheiten |

## Patentansprüche

1. Herbizides Mittel, enthaltend
A) einen oder mehrere Sulfonylharnstoffe der allgemeinen Formel (I) und/oder deren Salze 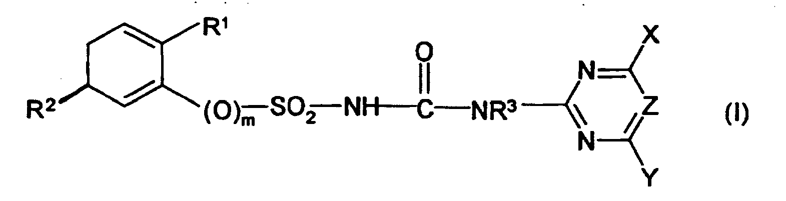 worin
R¹ C₂-C₄-Alkoxy oder CO-R^{a} ist, worin R^{a} gleich OH, C₁-C₆-Alkoxy oder NR^{b}R^{c} ist, worin R^{b} und R^{c} unabhängig voneinander gleich oder verschieden H oder C₁-C₆-Alkyl sind,
R² Halogen oder (A)ₙ-NR^{d}R^{e} ist, worin n gleich Null oder 1 ist, A eine Gruppe CR^{f}R^{g} ist, worin R^{f} und R^{g} unabhängig voneinander gleich oder verschieden H oder C₁-C₆-Alkyl sind, R^{d} gleich H oder C₁-C₆-Alkyl ist und R^{e} H, C₁-C₆-Alkyl oder ein Acyl-Rest ist, wobei R^{d} und R^{e} auch einen heterocyclischen Ring bilden können,
R³ H oder C₁-C₆-Alkyl ist,
m gleich Null oder 1 ist,
X und Y unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy,
Z gleich CH oder N ist, und
B) eines oder mehrere Tenside, enthaltend als Strukturelement mindestens 10 Alkylenoxideinheiten.

2. Herbizides Mittel gemäß Anspruch 1, enthaltend als Komponente B) eines oder mehrere Tenside der allgemeinen Formel (II)
R⁴-(EO)ₓ (PO)_{y} (EO)_{z}-R⁵ (II)
worin
EO eine Ethylenoxideinheit bedeutet,
PO eine Propylenoxideinheit bedeutet,
x eine ganze Zahl von 1 bis 50 bedeutet,
y eine ganze Zahl von 0 bis 50 bedeutet,
z eine ganze Zahl von 0 bis 50 bedeutet,
wobei die Summe (x+y+z)≥ 10 und ≤ 150 ist, und
R⁴ OH, einen unsubstituierten oder substituierten C₁-C₄₀₋Kohlenwasserstoffoxyrest, einen O-Acylrest oder NR^{I}R^{II} oder [NR^{I}R^{II}R^{III}]^{⊕}X^{⊖} bedeuten, worin R^{I}, R^{II} und R^{III} gleich oder verschieden H oder einen unsubstituierten oder substituierten C₁-C₃₀- Kohlenwasserstoffrest bedeuten, der optional über eine Gruppe (EO)_{w}, worin w eine ganze Zahl von 1 bis 50 ist, gebunden sein kann, und X^{⊖} ein Anion ist, und
R⁵ H, einen unsubstituierten oder substituierten C₁-C₄₀-Kohlenwasserstoffrest, einen Acylrest oder NR^{I}R^{II} oder [NR^{I}R^{II}R^{III}]^{⊕}X^{⊖} bedeuten, worin R^{I}, R^{II} und R^{III} gleich oder verschieden H oder einen unsubstituierten oder substituierten C₁₋C₃₀-Kohlenwasserstoffrest bedeuten, der optional über eine Gruppe (EO)_{w}, worin w eine ganze Zahl von 1 bis 50 ist, gebunden sein kann, und X^{⊖} ein Anion ist.

3. Herbizides Mittel nach Anspruch 1 oder 2, zusätzlich enthaltend eine oder mehrere weitere Komponenten aus der Gruppe enthaltend agrochemische Wirkstoffe anderer Art, im Pflanzenschutz übliche Zusatzstoffe und Formulierungshilfsmittel.

4. Verfahren zur Bekämpfung von Schadpflanzen, worin das herbizide Mittel, definiert gemäß einem oder mehreren der Ansprüche 1 bis 3, im Vorauflauf, Nachauflauf oder im Vor- und Nachauflauf auf die Pflanzen, Pflanzenteile, Pflanzensamen oder die Anbaufläche appliziert wird.

5. Verfahren nach Anspruch 4 zur selektiven Bekämpfung von Schadpflanzen in Pflanzenkulturen.

6. Verwendung des nach einem der Ansprüche 1 bis 3 definierten herbiziden Mittels zur Bekämpfung von Schadpflanzen.

7. Verfahren zur Herstellung eines herbiziden Mittels, definiert gemäß einem oder mehreren der Ansprüche 1 bis 3, wobei die Verbindung(en) der Formel (I) und/oder deren Salze mit einem oder mehreren Tensiden B) gemischt werden.

8. Verfahren gemäß Anspruch 7, worin die Komponenten A) und B) im Tankmischverfahren mit Wasser und / oder einem Öl gemischt werden.

## Claims

1. A herbicidal composition comprising
A) one or more sulfonylureas of the formula (I) and/or their salts 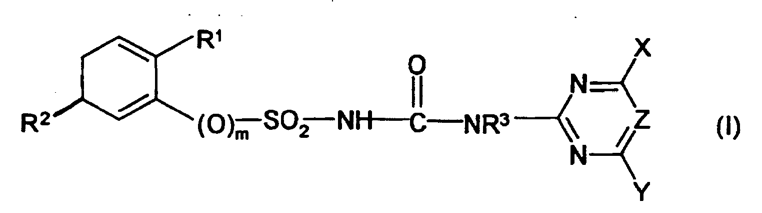 in which
R¹ is C₂-C₄-alkoxy or CO-R^{a}, where R^{a} is OH, C₁-C₆-alkoxy or NR^{b}R^{c}, where R^{b} and R^{c} independently of one another are identical or different and are H or C₁-C₆-alkyl,
R² is halogen or (A)ₙ-NR^{d}R^{e}, where n is zero or 1, A is a group CR^{f}R^{g}, where R^{f} and R^{g} independently of one another are identical or different and are H or C₁-C₆-alkyl, R^{d} is H or C₁-C₆-alkyl and R^{e} is H, C₁-C₆-alkyl or an acyl radical, where R^{d} and R^{e} may also form a heterocyclic ring,
R³ is H or C₁-C₆-alkyl,
m is zero or 1,
X and Y independently of one another are identical or different and are C₁-C₆-alkyl, C₁-C₆-alkoxy or C₁-C₆-alkylthio, where each of the three radicals mentioned is unsubstituted or substituted by one or more radicals selected from the group consisting of halogen, C₁-C₄-alkoxy and C₁-C₄-alkylthio, or are C₃-C₆₋cycloalkyl, C₂-C₆-alkenyl, C₂-C₆-alkynyl, C₃-C₆-alkenyloxy or C₃-C₆-alkynyloxy, preferably C₁-C₄-alkyl or C₁-C₄-alkoxy,
Z is CH or N, and
B) one or more surfactants comprising as structural element at least 10 alkylene oxide units.

2. The herbicidal composition as claimed in claim 1, comprising, as component B), one or more surfactants of the formula (II)
R⁴-(EO)ₓ(PO)_{y}(EO)_{z}-R⁵ (II)
in which
EO is an ethylene oxide unit,
PO is a propylene oxide unit,
x is an integer from 1 to 50,
y is an integer from 0 to 50,
z is an integer from 0 to 50,
where the sum (x+y+z) is ≥ 10 and ≤ 150, and
R⁴ is OH, an unsubstituted or substituted C₁-C₄₀-hydrocarbonoxy radical, an O-acyl radical or NR^{I}R^{II} or [NR^{I}R^{II}R^{III}]^{⊕}X^{⊖}, where R^{I}, R^{II} and R^{III} are identical or different and are H or an unsubstituted or substituted C₁-C₃₀-hydrocarbon radical which may be attached via a group (EO)_{w}, where w is an integer from 1 to 50, X^{⊖} being an anion, and
R⁵ is H, an unsubstituted or substituted C₁-C₄₀-hydrocarbon radical, an acyl radical or NR^{I}R^{II} or [NR^{I}R^{II}R^{III}]^{⊕}X^{⊖}, where R^{I}, R^{II} and R^{III} are identical or different and are H or an unsubstituted or substituted C₁-C₃₀-hydrocarbon radical which may be attached via a group (EO)_{w}, where w is an integer from 1 to 50, X^{⊖} being an anion.

3. The herbicidal composition as claimed in claim 1 or 2, additionally comprising one or more further components selected from the group consisting of agrochemically active compounds of a different type, additives conventionally used in crop protection, and formulation auxiliaries.

4. A method of controlling harmful plants, wherein the herbicidal composition as defined in one or more of claims 1 to 3 is applied to the plants, the parts of the plants, the seeds of the plants or the area under cultivation pre-emergence, post-emergence or pre- and post-emergence.

5. The method as claimed in claim 4 for selectively controlling harmful plants in crop plants.

6. The use of the herbicidal composition as defined in any of claims 1 to 3 for controlling harmful plants.

7. A process for the preparation of a herbicidal composition as defined in one or more of claims 1 to 3, wherein the compound(s) of the formula (I) and/or the salts thereof is or are mixed with one or more surfactants B).

8. The process as claimed in claim 7, wherein components A) and B) are mixed with water and/or an oil by the tank mix method.

## Revendications

1. Agent herbicide renfermant
A) une ou plusieurs sulfonylurées de formule générale (I) et/ou leurs sels 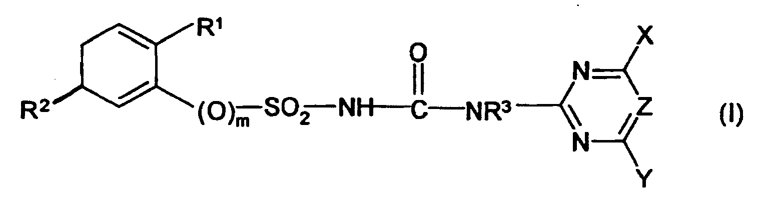 dans laquelle
R¹ représente un groupe alkoxy en C₂-C₄ ou CO-R^{a}, où R^{a} représente un groupe OH, alkoxy en C₁-C₆ ou NR^{b}R^{c}, où R^{b} et R^{c}, indépendamment l'un de l'autre, identiques ou différents, représentent un atome d'hydrogène ou un groupe alkyle en C₁-C₆,
R² représente un atome d'halogène ou un groupe (A)ₙ-NR^{d}R^{e}, où n vaut zéro ou 1, A représente un groupe CR^{f}R^{g}, où R^{f} et R^{g}, indépendamment l'un de l'autre, identiques ou différents, représentent un atome d'hydrogène ou un groupe alkyle en C₁-C₆, R^{d} représente un atome d'hydrogène ou un groupe alkyle en C₁-C₆ et R^{e} représente un atome d'hydrogène, un groupe alkyle en C₁-C₆ ou un reste acyle, R^{d} et R^{e} pouvant aussi former un cycle hétérocyclique,
R³ représente un atome d'hydrogène ou un groupe alkyle en C₁-C₆,
m vaut zéro ou 1,
X et Y, indépendamment l'un de l'autre, identiques ou différents, représentent un groupe alkyle en C₁-C₆, alkoxy en C₁-C₆ ou (alkyl en C₁-C₆) thio, chacun des trois restes cités pouvant être non substitué ou substitué par un ou plusieurs restes pris dans le groupe comprenant halogène, alkoxy en C₁-C₄ et (alkyl en C₁-C₄)thio, ou représente cycloalkyle en C₃-C₆, alcényle en substitué ou substitué par un ou plusieurs restes pris dans le groupe comprenant halogène, alkoxy en C₁-C₄ et (alkyl en C₁-C₄)thio, ou représente cycloalkyle en C₃-C₆, alcényle en C₂-C₆, alcynyle en C₂-C₆, alcényloxy en C₃-C₆ ou alcynyloxy en C₃-C₆, de préférence alkyle en C₁-C₄ ou alkoxy en C₁-C₄, et
Z représente un groupe CH ou N, et
B) un ou plusieurs agents de surface renfermant, en tant qu'élément de structure, au moins 10 unités d'oxyde d'alkylène.

2. Agent herbicide selon la revendication 1, renfermant en tant que composant B) un ou plusieurs agents de surface de formule générale
R⁴-(EO)ₓ(PO)_{y}(EO)_{z}-R⁵ (II)
où
EO représente une unité oxyde d'éthylène
PO représente une unité d'oxyde de propylène
x est un entier de 1 à 50,
y est un entier de 0 à 50,
z est un entier de 0 à 50,
la somme de (x+y+z) ≥ 10 et ≤ 150, et
R⁴ représente un groupe OH, un reste hydrocarboxy en C₁-C₄₀ non substitué ou substitué, un reste O-acyle ou un groupe NR^{I}R^{II} ou [NR^{I}R^{II}R^{III}]^{⊕}X^{⊝}, dans laquelle R^{I}, R^{II} et R^{III} sont identiques ou différents et représentent un atome d'hydrogène ou un reste hydrocarboxy en C₁-C₈₀ non substitué ou substitué, qui peut facultativement être lié par l'intermédiaire d'un groupe (EO)_{w}, où w est un entier de 1 à 50, et X^{⊝} est un anion, et
R⁵ représente un atome d'hydrogène, un reste hydrocarboxy en C₁-C₄₀ non substitué ou substitué, un reste acyle ou un groupe NR^{I}R^{II} ou [NR^{I}R^{II}R^{III}]^{⊕}X^{⊝}, dans laquelle R^{I}, R^{II} et R^{III} sont identiques ou différents et représentent un atome d'hydrogène ou un reste hydrocarboxy en C₁-C₃₀ non substitué ou substitué, qui peut facultativement être lié par l'intermédiaire d'un groupe (EO)_{w}, où w est un entier de 1 à 50, et X^{⊝} est un anion.

3. Agent herbicide selon la revendication 1 ou 2, renfermant de plus un ou plusieurs autres composants pris dans le groupe comprenant des matières actives agrochimiques de type différent, des additifs et formulants usuels dans le domaine de la phytoprotection.

4. Procédé pour la lutte contre les mauvaises herbes, dans lequel l'agent herbicide, défini selon une ou plusieurs des revendications 1 à 3, est appliqué en prélevée, en postlevée ou en prélevée ou en postlevée, aux plantes, aux parties de plantes, au semis des plantes ou à la surface cultivable.

5. Procédé selon la revendication 4, pour la lutte sélective contre les mauvaises herbes dans les cultures végétales.

6. Utilisation de l'agent herbicide défini selon l'une des revendications 1 à 3 pour la lutte contre les mauvaises herbes.

7. Procédé pour la préparation d'un agent herbicide défini selon une ou plusieurs des revendications 1 à 3, dans lequel on mélange le(s) composé(s) de formule (I) et/ou leurs sels avec un ou plusieurs agents de surface B).

8. Procédé selon la revendication 7, dans lequel les composants A) et B) sont mélangés dans un procédé de mélange en cuve avec l'eau et/ou une huile.
